# EUROPÄISCHE PATENTSCHRIFT

(11) **EP 1 042 391 B1**
(45) Veröffentlichungstag und Bekanntmachung des Hinweises auf die Patenterteilung: **07.11.2001**
(21) Anmeldenummer: 98963390.4
(22) Anmeldetag: 08.12.1998
(51) Int. Cl.: C08J 3/12, C09J 133/06, B01D 1/16

(54) **REDISPERGIERBARE POLYMERISATPULVER**
REDISPERSIBLE POLYMER POWDERS
POUDRE POLYMERE REDISPERSIBLE

(30) Priorität: 18.12.1997 DE 19756474
(43) Veröffentlichungstag der Anmeldung: 11.10.2000
(73) Patentinhaber: Buna Sow Leuna Olefinverbund GmbH, 06201 Merseburg (DE)
(72) Erfinder: KÜHN, Hartmut, D-06130 Halle (DE); KIESEL, Volker, D-06122 Halle (DE); ROTHENHÄUSSER, Bernd, D-06124 Halle (DE); WICHMANN, Andreas, D-06132 Halle (DE)
(86) Internationale Anmeldenummer: DE9803602
(87) Internationale Veröffentlichungsnummer: WO9932541

(56) Entgegenhaltungen:
- WO-A-96/20963
- WO-A-98/13411
- DE-A- 19 711 712
- DE-A- 19 733 166
- US-A- 4 892 910
- US-A- 5 342 897
- US-A- 5 703 156

## Beschreibung

Die vorliegende Erfindung betrifft redispergierbare Polymerisatpulver, die sich vor allem durch gute Lagerstabilität auszeichnen und vielseitig, so z.B. in hydraulisch abbindenden Systemen, aber auch als Bindemittel in verschiedensten Anwendungen, eingesetzt werden können und durch Sprühtrocknung wäßriger Dispersionen hergestellt werden.

Der Einsatz von Polymerisatpulvern als Zusatz, insbesondere für hydraulisch abbindende Systeme bzw. als Bindemittel in Beschichtungsmassen, ist allgemein bekannt. Derartige Zusätze verbessern die Anwendungseigenschaften der Systeme, in denen sie eingesetzt werden. So wird bei Einsatz in hydraulisch abbindenden Massen die Biege- und Zugfestigkeit der Baustoffe, denen sie zugesetzt werden, verbessert. Darüber hinaus üben sie einen vergütenden Einfluß auf die Verarbeitbarkeit der Baustoffe aus.

Die Herstellung derartiger Pulver ist bekannt und beispielsweise in folgenden Patentschriften bereits beschrieben:

In EP 0134451 wird der Einsatz verschiedener natürlich vorkommender wasserlöslicher Stoffe, wie Stärken, Stärkederivaten, Proteinen und/oder wasserlöslichen Polymeren als Sprühhilfe beim Herstellen von redispergierbaren Dispersionspulvem genannt.

DE OS 4021216 beschreibt die Herstellung eines Polymerisatpulvers, wobei ein filmbildendes Dispersionspolymerisat mit einem ganz oder teilweise neutralisierten wasserlöslichen Copolymerisat aus 50 bis 80 Gew.-% ungesättigten Carbonsäuren und einem Alken und/oder Styren als Sprühhilfsmittel versprüht wird. Nach EP 0 671 435 lassen sich wäßrige schutzkolloidhaltige Acrylatdispersionen bei Verwendung von 0,01 bis 30 Gew.-% wasserlöslicher bzw. wasserdispergierbarer Harze, die zu 30 bis 50 Gew.-% aus hydrophilen wasserlöslichen und salzbildenden Monomeren und zu 50 - 70 Gew.-% hydrophoben, im wesentlichen wasserunlöslichen Monomeren bestehen, zu pulverförmigen redispergierbaren Bindemitteln versprühen.

im EP 0522791 wird die Herstellung von Pulvern durch Versprühen von Kem-Schale-Produkten beschrieben, hierbei wird ein alkaliunlöslicher Kern mit einer alkalilöslichen Schale umgeben. Die Kern-Schale-Dispersion wird nach Neutralisation mit einem Amin oder einer Base versprüht.

Allen genannten redispergierbaren Pulvem liegt ein einheitliches Grundprinzip der Herstellung zugrunde:

Das zu versprühende Polymerisat wird mit einem Sprühhilfsmittel versetzt, das zu Beginn des Sprühtrocknungsvorgangs zunächst in gelöster Form vorliegt und sich während der Trocknung als "Schutzschild" um die zu versprühenden Teilchen legt. Das Sprühhilfsmittel hat einen großen Einfluß auf das Eigenschaftsbild des Pulvers. Zum einen soll es eine möglichst gute Redispergierbarkeit des Polymerpulvers gewährleisten und zum anderen, gemeinsam mit dem üblicherweise verwendeten Antiblockmittel, ein Verblocken des Pulvers während der Lagerung verhindern. Darüber hinaus soll das Sprühilfsmittel die anwendungstechnischen Eigenschaften des zu versprühenden Polymers nicht negativ beeinträchtigen, sondern möglichst vorteilhaft beeinflussen.

Der vorliegenden Erfindung lag die Zielstellung zugrunde, ein redispergierbares Polymerisatpulver herzustellen, das sich gegenüber den obengenannten dadurch auszeichnet, daß bei gleichem Anteil Sprühhilfsmittel (Gew.-% bezogen auf zu versprühendes Polymer) eine deutlich verbesserte Blockfestigkeit erreicht wird. Darüber hinaus soll die erfindungsgemäße Herstellung des Pulvers eine Vereinfachung der Herstellungstechnologie zur Folge haben .

Bei der Erarbeitung der Lösung zeigte sich, daß gut redispergierbare Dispersionspulver nicht nur auf die bisher übliche Weise, durch Einsatz eines in gelöster Form vorliegenden Sprühhilfsmittels, hergestellt werden können, sondern daß dies überraschenderweise auch bei Verwendung eines ungelöst vorliegenden Hilfsstoffes möglich ist, wenn dieser eine Teilchengröße hat, die deutlich kleiner ist als die Teilchengröße der zu versprühenden Dispersion.
Dies wird erreicht durch redispergierbare Polymerisatpulver, hergestellt durch Sprühtrocknung einer wäßrigen Dispersion, die erhalten wird durch Mischen einer wäßrigen Polymerdispersion 1 (Polymer I enthaltend) mit einer wäßrigen Polymerdispersion 2 (Polymer II enthaltend), wobei die Durchmesser der Teilchen des Polymer I um den Faktor 5 bis 150, vorzugsweise10 bis 50, größer sind als die Durchmesser der Teilchen des Polymer II und Polymer I ein bei Raumtemperatur filmbildendes Polymer ist, während Polymer II eine höhere Glasübergangstemperatur aufweist als Polymer I, wasserunlöslich ist und somit in der zu versprühenden wäßrigen Dispersion ungelöst vorliegt.
Die Glastemperatur von Polymer II sollte höher sein als die Temperatur am Ausgang des Sprühtrockners. Die Menge Polymer II, die benötigt wird (Gew.-% bez. auf Polymer I), um eine bestimmte Blockfestigkeit zu erreichen, kann um so geringer sein, je mehr sich Polymer I und Polymer II hinsichtlich ihrer Teilchengröße unterscheiden. Die Menge Polymer II, die eingesetzt wird, liegt bei 5 bis 40 Gew.-%, vorzugsweise 10 bis 30 Gew.-%. Der wäßrigen Dispersion können vor dem Versprühen Hilfsstoffe, etwa oberflächenaktive Stoffe, zur Verbesserung der Redispergierbarkeit zugesetzt werden.

Vorzugsweise besteht das Polymer II zu 5 bis 80 Gew.-%, insbesondere zu 20 bis 50 Gew.-%, aus einer einpolymerisierten ungesättigten Carbonsäure und ist somit ganz oder teilweise alkalilöslich, wobei der pH-Wert der zu versprühenden wäßrigen Dispersion jedoch so gering gehalten wird, daß Polymer II in ungelöster Form vorliegt.
Vorteilhafterweise werden als ungesättigte Carbonsäuren Methacrylsäure bzw. Acrylsäure eingesetzt.

Die Sprühtrocknung der wäßrigen Dispersion erfolgt in einem handelsüblichen Technikumssprühtrockner im Gleichstrom. Als Trocknungsgas dient Luft, die mit einer Temperatur von 115 °C in den Trockner eintritt und diesen mit einer Temperatur von 60 °C verläßt. Die Dispersionen I und II werden in jedem Fall als Dispersionsgemisch über eine Zweistoffdüse versprüht. Die Zugabe des Antiblockmittels (ABM) erfolgt über eine zweite Zweistoffdüse ebenfalls im Gleichstrom. in einem nachgeschalteten Zyklon wird das Pulver abgeschieden.

In den unten aufgeführten Beispielen kamen Polymerdispersionen folgender Zusammensetzung zum Einsatz:

| **Dispersion** | | **Teilchengröße** |
|---|---|---|
| | | (TGv nm) |
| **A** | Styren/Butylacrylat/Acrylamid (Tg nach Fox: 0 °C) | 600 |
| **B** | Styren/Butadien (Tg nach Fox : 5 °C) | 200 |
| **C** | Methyimethacrylat/Methacrylsäure (35 Gew.-% Methacrylsäure) | 25 |
| **D** | Methylmethacrylat/Methacrylsäure (35 Gew.-% Methacrylsäure) | 260 |
| **E** | Styren | 20 |
| **F** | Styren | 190 |

In Tabelle 1 sind die Beispiele näher charakterisiert und wesentliche Angaben über die Eigenschaften der hergestellten Polymerisatpulver zusammengefaßt.

**Tabelle 1**

| **wäßrige Dispersion** | | | | | | **Polymerisatpulver** | | | |
|---|---|---|---|---|---|---|---|---|---|
| **Beispiel** | **ph** | **Polymer I** | **%** | **Polymer II** | **%** | **Sedim. 1/24 Std. (ph < 7)** | **Sedim. 1/24 Std. (ph > 10)** | **ABM (%)** | **Block- festigkeit** |
| **1** | **< 7** | **A** | **80** | **C** | **20** | **4/24** | **1/7** | **5** | **12** |
| **2** | **< 7** | **A** | **85** | **C** | **15** | **6/27** | **2/10** | **5** | **17** |
| **3 V** | **< 7** | **A** | **80** | **D** | **20** | **9/38** | **7/27** | **5** | **30** |
| **4 V** | **>10** | **A** | **80** | **C** | **20** | | **2/8** | **5** | **36** |
| **5** | **>7** | **A** | **80** | **E** | **20** | **5/17** | | **5** | **24** |
| **6 V** | **>7** | **A** | **80** | **F** | **20** | **25/46** | | **5** | **60** |
| **7** | **>7** | **B** | **80** | **E** | **20** | **4/14** | | **5** | **20** |
| **8 V** | **>7** | **B** | **80** | **F** | **20** | **15/35** | | **5** | **50** |
| V = Vergleichsbeispiel | | | | | | | | | |

Der Zusatz weiterer Hilfsstoffe (z.B. oberflächenaktive Stoffe) erfolgte so, daß miteinander verglichene Proben jeweils die gleiche Menge davon enthalten. Man sieht in Tabelle 1, daß das Verhältnis der Teilchengrößen Polymer I : Polymer II einen entscheidenden Einfluß auf Sedimentation und Blockneigung hat (Vergleich Beispiel 1 mit Beispiel 3, Beispiel 5 mit Beispiel 6 und Beispiel 7 mit Beispiel 8). Es ist ersichtlich, daß die erfindungsgemäß hergestellten Beispiele sowohl hinsichtlich Sedimentation als auch in der Blockfestigkeit deutlich bessere Werte aufweisen (siehe dazu auch "Erläuterung der Untersuchungsmethoden ").

Beispiel 1 unterscheidet sich von Vergleichsbeispiel 4 lediglich dadurch, daß Beispiel 4 mit einem ph > 10 eingesetzt und somit Polymer II in gelöstem Zustand versprüht wurde. Es zeigte sich, daß sich dadurch die Blockfestigkeit deutlich verschlechtert.

Die Polymerisatpulver aus Beispiel 1 und aus Vergleichsbeispiel 4 wurden einer Mischung aus 78 Gew.-% Normsand und 22 Gew.-% Zement (32,5) hinzugefügt und daraus ein Mörtel hergestellt (Kunststoff : Zement-Verhältnis jeweils 0,1, Wasser : Zement 0,45), der nach EN 196 untersucht wurde.

Aus Tabelle 2 ist ersichtlich, daß die stark verbesserte Blockfestigkeit des erfindungsgemäß hergestellten Pulvers nicht zu Lasten wesentlicher anwendungstechnischer Eigenschaften erreicht wird. Sowohl in der Biegezug- als auch in der Druckfestigkeit weist der unter Zusatz von Pulver nach Beispiel 1 hergestellte Beton bessere Werte auf.

**Tabelle 2**

| Beispiel | Ausbreitmaß (mm) | Dichte Prismen (g/cm³) | Biegezugfestigkeit (N/mm²) 14 Tage | Druckfestigkeit (N/mm²) 14 Tage |
|---|---|---|---|---|
| 1 | 148 | 2,11 | 7,4 | 37 |
| 4V | 152 | 2,12 | 6,9 | 33 |

### Erläuterung der Untersuchungsmethoden:

*Blocktest*: Zunächst wird aus dem Pulver eine Tablette geformt, hierbei wirkt ein Gewicht auf einen Stempel, der das Pulver in einem Metallzylinder von 50 mm Durchmesser 24 Std. belastet. Es wird eine Belastung gewählt, die größer ist als sie etwa bei einer Lagerung in Paletten auftritt, um eine Tablettenbildung auch bei Pulvern zu ermöglichen, die kaum Blockneigung aufweisen, und somit diese Methode auch beim Vergleich von Pulvern mit sehr gutem Blockverhalten nutzen zu können.
Die erhaltene Tablette wird in einen sich in waagerechter Lage um die Längsachse rotierenden Hohizylinder, dessen Mantelfläche mit Siebgewebe bespannt ist, gegeben. Der Zylinder dreht sich mit einer Geschwindigkeit von 40 U/min, die Masse des durch das Siebgewebe fallenden Pulvers wird erfaßt. Es wird die Zeit ermittelt, innerhalb derer 50 % der Masse der Tablette durch das Sieb gelangen. Je kleiner die Zeit, desto geringer ist also die Neigung des Pulvers zu verblocken. Unter den gewählten Bedingungen erreichen handelsübliche Pulver Werte von 10 bis 20 sec.

*Sedimentation:* Dieser Wert liefert eine Aussage über die Redispergierbarkeit des untersuchten Pulvers.
Das Pulver wird hierzu im Verhältnis 1 : 1 im Wasser redispergiert und anschließend verdünnt, 50 g der 5 %igen Redispersion werden in eine kalibrierte Röhre gefüllt und nach 1 Std. bzw. 24 Std. die Höhe der Sedimentschicht gemessen, je niedriger die erhaltenen Werte sind, um so besser redispergierbar ist das Pulver.
In Tabelle 1 wird im Falle des Einsatzes von alkalilöslichen Polymeren zusätzlich die Sedimentation der bei ph > 10 hergestellten Redispersion bestimmt, da dieses den Bedingungen bei Einsatz des Pulvers im Mörtel näherkommt.
Unter den gewählten Redispersionsbedingungen weisen handelsübliche Pulver Werte von etwa 2 bzw. 8 - 10 mm auf.

## Patentansprüche

1. Redispergierbare Polymerisatpulver hergestellt durch Sprühtrocknung einer wäßrigen Dispersion, **dadurch gekennzeichnet, daß** diese Dispersion durch Mischen einer wäßrigen Polymerdispersion 1 (Polymer I enthaltend) mit einer wäßrigen Polymerdispersion 2 (Polymer II enthaltend) erhalten wird, wobei die Durchmesser der Teilchen des Polymer I um den Faktor 5 bis 150 größer sind als die Durchmesser der Teilchen des Polymer II und Polymer I ein bei Raumtemperatur filmbildendes Polymer ist, während Polymer II eine höhere Glasübergangstemperatur aufweist als Polymer I, wasserunlöslich ist und somit in der zu versprühenden wäßrigen Dispersion ungelöst vorliegt und in einer Menge von 5 bis 40 Gew.-% bezogen auf die Gesamtmasse Polymer I und Polymer II eingesetzt wird.

2. Redispergierbare Polymerisatpulver gemäß Anspruch 1, **dadurch gekennzeichnet, daß** Polymer II 5 bis 80 Gew.-%, vorzugsweise 20 bis 50 Gew.-%, einpolymerisierte ungesättigte Carbonsäuren enthält, somit ganz oder teilweise alkalilöslich ist, der ph-Wert der zu versprühenden wäßrigen Dispersion jedoch so gering gehalten wird, daß Polymer II in wasserunlöslicher Form vorliegt und daß als ungesättigte Carbonsäuren Methacrylsäure oder Acrylsäure eingesetzt werden.

3. Redispergierbare Polymerisatpulver gemäß den Ansprüchen 1 und 2, **dadurch gekennzeichnet, daß** die Durchmesser der Teilchen des Polymer I um den Faktor 10 bis 50 größer sind als die Durchmesser der Teilchen des Polymer II.

4. Redispergierbare Polymerisatpulver gemäß den Ansprüchen 1 bis 3, **dadurch gekennzeichnet, daß** das Polymer II in einer Masse von 10 bis 30 Gew.-% bezogen auf die Gesamtmasse Polymer I und Polymer II vorliegt.

## Claims

1. A redispersible polymer powder made through spray-drying an aqueous dispersion, whereby this dispersion is obtained through mixing an aqueous polymer dispersion 1 (containing polymer I) with an aqueous polymer dispersion 2 (containing polymer II), whereby the diameter of the particles of polymer I is larger than that of the particles of polymer II by a factor of 5 to 150 and whereby polymer I is a polymer that forms a film at room temperature whereas polymer II has a higher glass transition temperature than polymer I and is insoluble in water and thus prevails undissolved in the aqueous dispersion to be sprayed and is used at a rate of 5 to 40 percent by weight in relation to the total volume of polymer I and polymer II.

2. A redispersible polymer powder according to claim 1, whereby polymer II contains 5 to 80 percent by weight, preferably however 20 to 50 percent by weight, of polymerized unsaturated carboxylic acids and thus is wholly or partly alkalisoluble, but whereby the pH of the aqueous solution to be sprayed is kept as low as though polymer II is insoluble in water, and methacrylic acid or acrylic acid are used as unsaturated carboxylic acids.

3. A redispersible polymer powder according to claims 1 and 2 , whereby the diameter of the particles of polymer I is larger than that of the particles of polymer II by a factor of 10 to 50.

4. A redispersible polymer powder according to claims 1 through 3, whereby polymer II prevails at a rate of 10 to 30 percent by weight relative to the total volume of polymer I and polymer II.

## Revendications

1. Poudre de polymère redispersible produite par séchage par pulvérisation d'une dispersion aqueuse, **caractérisée par le fait que** cette dispersion est obtenue par mélange d'une dispersion aqueuse de polymère 1 (contenant le polymère I) avec une dispersion aqueuse de polymère 2 (contenant le polymère II), le diamètre des particules du polymère I étant supérieur du facteur de 5 jusqu'à 150 au diamètre des particules du polymère II et le polymère I étant un polymère formant un film sous température ambiante alors que le polymère II présente une température de transition vitreuse plus élevée que le polymère I, qu'il est insoluble dans l'eau et ainsi se présente non dissous dans la dispersion aqueuse à pulvériser et sera utilisé dans une quantité de 5 à 40 % en poids dans le poids total du polymère I et du polymère II.

2. Poudre de polymère redispersible selon revendication 1, **caractérisée par le fait que** le polymère II contient de 5 à 80 % en poids, mais de préférence de 20 à 50 % en poids d'acide carboxylique non saturé introduit par polymérisation, qu'il est ainsi totalement ou partiellement soluble aux alcalis, que la valeur du Ph de la dispersion aqueuse à pulvériser est cependant si faible que le polymère II se trouve sous forme non soluble dans l'eau et que les acides carboxyliques utilisés sont de l'acide méthacrylique ou de l'acide acrylique.

3. Poudre de polymère redispersible selon les revendications 1 et 2, **caractérisée par le fait que** le diamètre des particules du polymère I sont supérieures du facteur de 10 à 50 au diamètre des particules du polymère II.

4. Poudre de polymère redispersible selon les revendications de 1 à 3 , **caractérisée par le fait que** le polymère II se trouve dans une quantité de 10 à 30 % en poids par rapport au poids total du polymère I et du polymère II.
